# FASCICULE DE BREVET EUROPEEN

(11) **EP 2 213 549 B1**
(45) Date de publication et mention de la délivrance du brevet: **02.11.2011**
(21) Numéro de dépôt: 10151878.5
(22) Date de dépôt: 28.01.2010
(51) Int. Cl.: B62D 17/00

(54) **Procédé de contrôle du braquage des roues arrière d'un véhicule automobile.**
Verfahren zur Steuerung des Lenkeinschlags der Hinterräder eines Kraftfahrzeugs
Method for controlling the steering of the rear wheels of a motor vehicle

(30) Priorité: 03.02.2009 FR 0950674
(43) Date de publication de la demande: 04.08.2010
(73) Titulaire: Peugeot Citroën Automobiles SA, 78140 Vélizy-Villacoublay (FR)
(72) Inventeur: Mornet, Mickael, 78330, FONTENAY LE FLEURY (FR); Campo, Marc, 92320, CHATILLON (FR)

(56) Documents cités:
- EP-A- 1 145 936
- EP-A- 1 892 179
- EP-A- 1 958 841
- EP-B- 1 144 212
- JP-A- 5 077 626
- JP-A- 2007 290 507
- US-A- 5 143 400
- US-A- 5 438 515
- US-A- 5 559 698

## Description

La présente invention concerne un procédé de contrôle de l'angle de braquage des roues arrière d'un véhicule automobile, ainsi qu'un véhicule automobile équipé de ce procédé.

Les trains arrière des véhicules automobiles comportent généralement un réglage du parallélisme comprenant un pincement des roues arrière. Dans le sens de la marche, chaque roue rentre légèrement vers l'intérieur du véhicule, ce qui améliore la stabilité arrière de ce véhicule, en particulier dans les virages et lors des freinages.

Un problème qui se pose dans ce cas, est que le pincement des roues arrière provoque un léger ripage permanent de ces roues lors du roulage en ligne droite, qui génère une résistance au roulement consommant de l'énergie, et occasionnant une usure plus élevée des pneumatiques.

Par ailleurs, certains véhicules automobiles comportent une commande de braquage des roues arrière, qui agit en coopération avec la commande de braquage des roues avant actionnée par le conducteur.

L'angle de braquage des roues arrière est généralement dépendant de la vitesse du véhicule. Aux basses vitesses, les roues arrière sont orientées dans le sens opposé aux roues avant, pour diminuer le rayon de braquage du véhicule et faciliter les manoeuvres. Aux vitesses plus élevées, par exemple au dessus de 60km/h, les roues arrière sont orientées dans le même sens que les roues avant afin d'améliorer la stabilité du véhicule dans les virages, en particulier lors des manoeuvres d'évitement.

Pour réaliser ces fonctions, on peut disposer un actionneur commun pour braquer simultanément les deux roues arrière, ou deux actionneurs indépendants de commande de chaque roue, qui reproduisent sensiblement les mêmes mouvements de braquage sur ces roues arrière.

Un procédé selon le préambule de la revedication 1 est connu du document EP 1145936 A.

Un dispositif de braquage des roues arrière comportant deux actionneurs indépendants, décrit notamment dans le document US-5438515, comporte un calculateur de contrôle de ces actionneurs, qui peut régler indépendamment les valeurs de braquage de chaque roue arrière.

Cependant il subsiste toujours, en particulier dans le cas d'un roulage en ligne droite, des résistances au roulement dues aux réglages du pincement des roues arrière.

La présente invention a notamment pour but d'éviter ces inconvénients de la technique antérieure, et de proposer un procédé de contrôle du braquage des roues arrière, permettant de réduire la résistance au roulement de ce train arrière.

Elle propose à cet effet un procédé de contrôle du braquage des roues arrière d'un véhicule automobile conformément à l'objet de la revendication 1.

De plus le procédé de contrôle du braquage selon l'invention peut comporter une ou plusieurs des caractéristiques suivantes, qui peuvent être combinées entre elles.

Avantageusement, un pincement sensiblement usuel non nul des roues arrière est exceptionnellement maintenu à toutes les vitesses, lorsque des capteurs du véhicule détectent des conditions environnementales défavorables.

Avantageusement, on réalise une filtration des informations reçues pour effectuer les phases de transition entre les états du pincement, et obtenir des variations progressives de ce pincement.

Avantageusement, un temps de validation du roulage en ligne droite est attendu avant d'appliquer aux roues arrière le pincement sensiblement nul.

Le calculateur peut tenir compte d'informations sur l'état du véhicule, pour en fonction de valeurs prédéfinies, effectuer des corrections du braquage de chaque roue arrière suivant des variations de géométrie du train arrière, et maintenir le pincement sensiblement nul.

Suivant une première option, le procédé de contrôle du braquage comporte un programme permettant d'établir dans les différentes conditions de roulage, le pincement fixe standard d'un véhicule du même type comprenant seulement deux roues directrices.

Suivant une deuxième option, le procédé de contrôle du braquage comporte un programme permettant d'établir dans les différentes conditions de roulage, le pincement fixe standard d'un véhicule du même type comprenant quatre roues directrices.

Selon un mode de réalisation, le procédé de contrôle du braquage commande des actionneurs comprenant une cinématique du type irréversible.

Selon un autre mode de réalisation, le procédé de contrôle du braquage commande des actionneurs comprenant une cinématique du type réversible, ainsi qu'un dispositif de blocage mécanique du braquage des roues arrière.

Avantageusement, le pincement usuel non nul des roues arrière est maintenu lorsque le véhicule est dans une position parking

L'invention comporte aussi un véhicule automobile à train arrière à roues directrices, comprenant un calculateur recevant différentes informations sur l'état du véhicule, et agissant sur deux actionneurs indépendants de braquage de chaque roue arrière, **caractérisé en ce que** le calculateur comporte un procédé réalisé suivant l'une quelconque des caractéristiques précédentes.

L'invention sera mieux comprise et d'autres caractéristiques et avantages apparaîtront plus clairement à la lecture de la description ci-après, donnée à titre d'exemple en référence aux dessins annexés dans lesquels :
- la figure 1 est une vue schématique de dessus d'un véhicule comprenant quatre roues directrices et un seul actionneur de braquage des roues arrière, selon l'art antérieur ;
- la figure 2 est une vue schématique de dessus d'un véhicule selon l'invention en virage, comprenant quatre roues directrices et deux actionneurs indépendants de braquage des roues arrière, suivant un premier mode de fonctionnement ;

- la figure 3 est une vue de ce véhicule en virage, suivant un deuxième mode de fonctionnement ; et
- la figure 4 est une vue de ce véhicule en ligne droite.

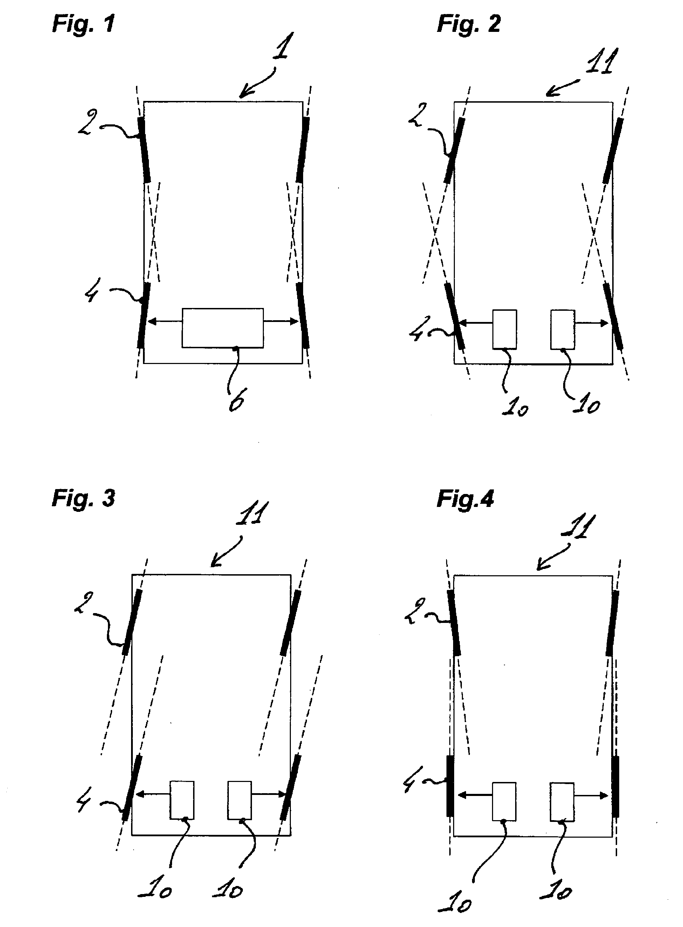

La figure 1 représente un véhicule 1 comprenant deux roues avant 2 directrices commandées par un volant de direction manoeuvré par le conducteur, et deux roues arrière 4 directrices.

Le réglage du train avant comporte en ligne droite, une ouverture des roues avant 2 qui ne sont pas parallèles, et comprennent chacune dans le sens de la marche, un léger braquage vers l'extérieur du véhicule.

Le train arrière comporte deux roues arrière directrices 4 commandées par un actionneur commun 6, braquant simultanément ces deux roues arrière. Le réglage de ce train arrière comprend en ligne droite un pincement des roues arrière 4, chacune comportant dans le sens de la marche, un léger braquage vers l'intérieur du véhicule.

La commande des roues arrière 4 étant effectuée par un actionneur commun 6, celui-ci peut seulement commander un braquage global du train arrière en réalisant simultanément un pivotement de ses deux roues. Le réglage de pincement du train arrière est fait de manière fixe et définie au préalable, l'actionneur 6 ne pouvant pas intervenir sur ce réglage.

Les réglages des trains roulants tiennent compte de l'application des efforts sur ces trains qui entraîne des variations de géométrie lors des débattements des roues, et des déformations des composants, pour optimiser le comportement du véhicule, notamment la tenue de route.

En particulier l'utilisation d'un pincement prononcé du train arrière, permet d'améliorer la stabilité de ce train arrière dans les virages et lors des freinages importants, par une augmentation des frottements au niveau des pneumatiques, ce qui améliore la tenue de route et la sécurité.

Le problème est que ce réglage fixe de pincement du train arrière, génère en permanence un frottement additionnel des pneumatiques, y compris lors du roulage en ligne droite dans des conditions normales, alors qu'il n'est pas utile. Ces frottements additionnels ajoutent une résistance au roulement, et donc une augmentation de la consommation et des émissions polluantes, ainsi qu'une usure plus grande des pneumatiques.

Le véhicule 1 comporte un calculateur électronique recevant des informations sur le fonctionnement du véhicule, notamment par un réseau de bord du type CAN.

Le calculateur reçoit en particulier des informations sur la position du volant de direction manoeuvrée par le conducteur, et sur la vitesse du véhicule 1, pour en déduire un braquage des roues arrière effectué par l'actionneur unique 6, qui vient dans les virages en complément du braquage des roues avant 2.

La figure 2 présente un véhicule 11 selon l'invention, comprenant un calculateur contrôlant le fonctionnement de deux actionneurs 10 indépendants, qui commandent chacun le braquage d'une roue arrière.

Le véhicule effectue un virage à droite à une basse vitesse qui est inférieure à environ 60 km/h.

Pour ces basses vitesses, les actionneurs 10 commandent un braquage des deux roues arrière 4 dans le sens opposé à celui des roues avant 2, ce qui permet de réduire le rayon de rotation du véhicule 11. Le véhicule 11 pouvant tourner dans un espace réduit, sa maniabilité est améliorée. La tenue de route pour ces basses vitesses ne pose pas vraiment de problème.

La figure 3 présente le véhicule 11 effectuant toujours un virage à droite à des vitesses plus élevées, en particulier à des vitesses supérieures à environ 60 km/h. Dans ce cas, les actionneurs 10 commandent un braquage des deux roues arrière 4 dans le même sens que celui des roues avant 2, pour améliorer la stabilité du véhicule en virage.

D'une manière générale, les deux actionneurs 10 commandent en virage le braquage des roues arrière 4 dans le même sens, mais avec des angles légèrement différents pour tenir compte des rayons de giration différents entre la roue intérieure au virage et celle extérieure.

La figure 4 présente le véhicule 11 roulant en ligne droite. Les roues avant 2 sont disposées symétriquement, avec un petit braquage de chacune vers l'extérieur pour former une ouverture du train avant.

Le calculateur contrôle les actionneurs 10 du train arrière, pour commander une position des roues arrière 4, alignées suivant l'axe du véhicule et donc parallèles entre elles, avec un pincement nul.

Lors du roulage on peut constater des variations de la géométrie du train arrière, notamment lors de l'affaissement de la suspension arrière, et donc du pincement souhaité. Avantageusement, le calculateur tient compte d'informations extérieures sur l'état du véhicule, et en fonction de valeurs prédéfinies gardées en mémoire, effectue de petites corrections du braquage de chaque roue arrière 4 suivant les variations de géométrie. Ces corrections peuvent être dynamiques.

On maintient ainsi pour chaque roue arrière 4 et dans tous les cas de fonctionnement, le pincement nul pour apporter la plus faible résistance au roulement, et donc des économies d'énergie et une réduction des émissions polluantes.

On favorise aussi dans ce cas, en réduisant les frottements dans les pneumatiques ainsi que les contraintes dans des éléments du train arrière comme les roulements ou les articulations, une réduction de l'usure de ces composants.

Suivant les conditions de fonctionnement du véhicule, on prévoit avantageusement une filtration des informations reçues par le calculateur pour réaliser les phases de transition entre les différents états du pincement, et obtenir des variations progressives de ce pincement sans à-coups.

En particulier, un temps de validation du roulage en ligne droite est attendu avant d'appliquer aux roues arrière le pincement sensiblement nul, pour éviter une fausse détection ou des changements d'état trop fréquents.

Un pincement sensiblement nul du train arrière, est aussi généralement appliqué dans les virages pris aux basses vitesses, notamment quand les roues arrières 4 sont braquées dans le même sens que celles d'avant 2, la tenue de route du véhicule ne posant pas de problème. On obtient ainsi les mêmes avantages d'économie.

Exceptionnellement, le pincement peut être maintenu en permanence à toutes les vitesses dans des circonstances particulières comme des conditions environnementales défavorables détectées par des capteurs du véhicule, comprenant par exemple un fort vent ou une chaussée glissante, la tenue de route étant alors plus délicate.

Avec deux actionneurs indépendants 10 de braquage des roues arrière 4, on peut de plus réaliser d'autres fonctions déjà connues comme une correction du lacet du véhicule, en agissant différemment sur ces deux roues.

Avantageusement, le véhicule étant dans une position parking, le pincement usuel non nul des roues arrière est maintenu.

Un autre avantage du procédé selon l'invention, est que les deux actionneurs indépendants 10 peuvent reproduire différents états du véhicule pour faciliter sa mise au point, lors du développement.

On peut en particulier effectuer une première mise au point du type véhicule deux roues directrices. Le calculateur contrôle un pincement standard des roues arrière 4 appliqué sur un véhicule du même type à seulement deux roues directrices, pour tester les réglages de ce véhicule.

On peut effectuer ensuite un deuxième mise au point du type véhicule quatre roues directrices à pincement des roues arrière fixe. Le calculateur contrôle un pincement défini des roues arrière 4, maintenu en permanence, qui s'ajoute au manoeuvre de braquage de ces roues pour tester les réglages du véhicule, notamment la manoeuvrabilité aux basses vitesses et la stabilité aux vitesses supérieures.

Et enfin la mise au point du véhicule peut être terminée, pour les réglages restant de la variation du pincement du train arrière.

Par ce procédé, on conserve la plupart des règles de conception habituelles d'un train arrière. On peut en particulier utiliser ce procédé en combinaison avec un système de contrôle de trajectoire du type « ESP ».

Un type d'actionneur connu pour la commande de braquage des roues arrière 4, qui peut être utilisé en combinaison avec le procédé selon l'invention, comporte une transmission de mouvement irréversible entre la motorisation de ces actionneurs et la biellette de commande de braquage des roues. Cette transmission de mouvement peut comprendre par exemple un moteur brushless et un réducteur du genre vis et écrou.

Ces systèmes sont simples, et ne consomment pas d'énergie en ligne droite. Ils assurent facilement la sécurité en cas de défaillance de l'actionneur, les roues arrière 4 restant fixées dans leur position, les efforts sur ces roues ne venant pas modifier le braquage.

Par contre, ces transmissions irréversibles comportent généralement un mauvais rendement. Il faut alors dimensionner la motorisation de cet actionneur en fonction de pertes importantes. Cette motorisation est plus chère, et plus encombrante.

Un autre type d'actionneur connu du type réversible, peut aussi être utilisé en combinaison avec le procédé suivant l'invention. Ces actionneurs comportant généralement- un bon rendement, permettent d'utiliser des motorisations plus compactés et moins chères, ce qui est important dans ce cas où il en faut deux.

Pour palier à la réversibilité de cette transmission, et éviter d'avoir à alimenter la motorisation en permanence pour maintenir le braquage demandé, on dispose sur chaque pivot de roue arrière 4 un verrou de blocage du pivotement, pour maintenir notamment des positions prédéfinies en ligne droite, avec un pincement ou sans pincement. Ce verrou comprenant par exemple un électro-aimant commandant un pion qui descend dans un perçage, est simple et économique.

## Revendications

1. Procédé de contrôle du braquage des roues arrière d'un véhicule automobile, mis en oeuvre par un calculateur recevant différentes informations sur l'état du véhicule (11), et agissant sur deux actionneurs (10) indépendants de braquage de chaque roue arrière (4), les actionneurs indépendants de braquage (10) maintenant dans des conditions normales de roulage en ligne droite, un pincement des roues arrière sensiblement nul, et dans des conditions particulières de roulage comprenant des virages pris au dessus d'une certaine vitesse, ou des freinages importants, un pincement usuel non nul de ces roues arrière (4), **caractérisé en ce qu'**en dessous d'une vitesse du véhicule (11) qui est de l'ordre de 60 km/h, un pincement sensiblement nul des roues arrière est généralement maintenu dans toutes les conditions de roulage.

2. Procédé de contrôle du braquage selon la revendication 1, **caractérisé en ce qu'**un pincement usuel non nul des roues arrière est exceptionnellement maintenu à toutes les vitesses, lorsque des capteurs du véhicule détectent des conditions environnementales défavorables.

3. Procédé de contrôle du braquage selon l'une quelconque des revendications précédentes, **caractérisé en ce qu'**on réalise une filtration des informations reçues pour effectuer les phases de transition entre les états du pincement, et obtenir des variations progressives de ce pincement.

4. Procédé de contrôle du braquage selon l'une quelconque des revendications précédentes, **caractérisé en ce qu'**un temps de validation du roulage en ligne droite est attendu avant d'appliquer aux roues arrière le pincement sensiblement nul.

5. Procédé de contrôle du braquage selon l'une quelconque des revendications précédentes, **caractérisé en ce que** le calculateur tient compte d'informations sur l'état du véhicule (11), pour en fonction de valeurs prédéfinies, effectuer des corrections du braquage de chaque roue arrière (4) suivant des variations de géométrie du train arrière, et maintenir le pincement sensiblement nul.

6. Procédé de contrôle du braquage selon l'une quelconque des revendications précédentes, **caractérisé en ce qu'**il commande des actionneurs (10) comprenant une cinématique du type irréversible.

7. Procédé de contrôle du braquage selon quelconque des revendications 1 à 5, **caractérisé en ce qu'**il commande des actionneurs (10) comprenant une cinématique du type réversible, ainsi qu'un dispositif de blocage mécanique de l'angle de braquage des roues arrière.

8. Procédé de contrôle du braquage selon l'une quelconque des revendications précédentes, **caractérisé en ce que** le pincement usuel non nul des roues arrière est maintenu lorsque le véhicule est dans une position parking.

9. Véhicule automobile (11) à train arrière à roues directrices, comprenant un calculateur recevant différentes informations sur l'état du véhicule, et agissant sur deux actionneurs (10) indépendants de braquage de chaque roue arrière (4), le calculateur mettant en oeuvre un procédé suivant l'une quelconque des revendications précédentes.

## Claims

1. A method for controlling the steering of the rear wheels of a motor vehicle, implemented by a computer receiving different information concerning the status of the vehicle (11), and acting on two independent steering actuators (10) of each rear wheel (4), the independent steering actuators (10) maintaining under normal travelling conditions in a straight line a substantially zero toe-in of the rear wheels, and under particular travelling conditions comprising turns taken above a certain speed, or high braking, a usual non-zero toe-in of these rear wheels (4), **characterized in that** below a speed of the vehicle (11) which is in the order of 60 km/h, a substantially zero toe-in of the rear wheels is generally maintained in all the travelling conditions.

2. The method for controlling steering according to Claim 1, **characterized in that** a usual non-zero toe-in of the rear wheels is exceptionally maintained at all speeds, when pick-ups of the vehicle detect unfavourable environmental conditions.

3. The method for controlling steering according to any one of the preceding claims, **characterized in that** a filtration is carried out of the received information to effect the transition phases between the statuses of the toe-in, and to obtain progressive variations of this toe-in.

4. The method for controlling steering according to any one of the preceding claims, **characterized in that** a validation time of travelling in a straight line is awaited before applying the substantially zero toe-in to the rear wheels.

5. The method for controlling steering according to any one of the preceding claims, **characterized in that** the computer takes into account information concerning the status of the vehicle (11), so as to carry out as a function of predefined values corrections of the steering of each rear wheel (4) according to variations in geometry of the rear-wheel axle unit, and to maintain the substantially zero toe-in.

6. The method for controlling the steering according to any one of the preceding claims, **characterized in that** it commands actuators (10) comprising kinematics of the irreversible type.

7. The method for controlling the steering according to any one of Claims 1 to 5, **characterized in that** it commands actuators (10) comprising kinematics of the reversible type, and also a mechanical locking device of the steering angle of the rear wheels.

8. The method for controlling the steering according to any one of the preceding claims, **characterized in that** the usual non-zero toe-in of the rear wheels is maintained when the vehicle is in a parking position.

9. A motor vehicle (11) having a rear-wheel axle unit with guiding wheels, comprising a computer receiving different information concerning the status of the vehicle, and acting on two independent steering actuators (10) of each rear wheel (4), the computer implementing a method according to any one of the preceding claims.

## Patentansprüche

1. Verfahren zum Steuern des Einschlagens der Hinterräder eines Fahrzeugs, umgesetzt durch einen Rechner, der unterschiedliche Informationen über den Zustand des Fahrzeugs (11) erhält und auf zwei unabhängige Stellantriebe (10) zum Einschlagen jedes Hinterrads (4) einwirkt, wobei die unabhängigen Einschlagstellantriebe (10) unter normalen Fahrbedingungen eine hintere Spurweitenverringerung, die im Wesentlichen gleich null ist, geradlinig halten, und unter besonderen Fahrbedingungen, wie Kurven, die über einer bestimmten Geschwindigkeit genommen werden, oder starke Bremsungen aufweisen, eine Spurweitenverringerung dieser Hinterräder (4), die normalerweise nicht gleich null ist, aufrecht erhalten, **dadurch gekennzeichnet, dass** unterhalb einer Geschwindigkeit des Fahrzeugs (11), die in der Größenordnung von 60 km/h ist, im Allgemeinen die Spurweitenverringerung der Hinterräder, die im Wesentlichen gleich null ist, unter allen Fahrbedingungen aufrechterhalten wird.

2. Verfahren zum Steuern des Einschlagens nach Anspruch 1, **dadurch gekennzeichnet, dass** eine übliche Spurweitenverringerung der Hinterräder, die nicht gleich null ist, ausnahmsweise bei allen Fahrgeschwindigkeiten aufrechterhalten wird, wenn Sensoren des Fahrzeugs ungünstige Umgebungsbedingungen erfassen.

3. Verfahren zum Steuern des Einschlagens nach einem der vorhergehenden Ansprüche, **dadurch gekennzeichnet, dass** man ein Filtern der empfangenen Informationen ausführt, um die Übergangsphasen zwischen den Zuständen der Spurweitenverringerung auszuführen und allmähliche Variationen dieser Spurweitenverringerung zu erzielen.

4. Verfahren zum Steuern des Einschlagens nach einem der vorhergehenden Ansprüche, **dadurch gekennzeichnet, dass** eine Zeit zum Bestätigen des geradlinigen Fahrens abgewartet wird, bevor die Spurweitenverringerung gleich null auf die Hinterräder angewandt wird.

5. Verfahren zum Steuern des Einschlagens nach einem der vorhergehenden Ansprüche, **dadurch gekennzeichnet, dass** der Rechner Informationen über den Zustand des Fahrzeugs (11) berücksichtigt, um in Abhängigkeit von vordefinierten Werten Korrekturen des Einschlagens jedes Hinterrads (4) gemäß Geometrievariationen der Hinterachse auszuführen und die Spurweitenverringerung, die im Wesentlichen gleich null ist, aufrecht zu erhalten.

6. Verfahren zum Steuern des Einschlagens nach einem der vorhergehenden Ansprüche, **dadurch gekennzeichnet, dass** es Stellantriebe (10) steuert, die eine Kinematik des nicht umkehrbaren Typs aufweisen.

7. Verfahren zum Steuern des Einschlagens nach einem der Ansprüche 1 bis 5, **dadurch gekennzeichnet, dass** es Stellantriebe (10) steuert, die eine Kinematik des umkehrbaren Typs aufweisen sowie eine Vorrichtung zum mechanischen Blockieren des Einschlagwinkels der Hinterräder.

8. Verfahren zum Steuern des Einschlagens nach einem der vorhergehenden Ansprüche, **dadurch gekennzeichnet, dass** die übliche Spurweitenverringerung der Hinterräder, die nicht gleich null ist, aufrechterhalten wird, wenn sich das Fahrzeug in einer Parkposition befindet.

9. Kraftfahrzeug (11) mit Hinterachse mit Leiträdern, das einen Rechner aufweist, der unterschiedliche Informationen über den Zustand des Fahrzeugs empfängt und auf zwei unabhängige Einschlagstellantriebe (10) für jedes Hinterrad (4) einwirkt, wobei der Rechner ein Verfahren nach einem der vorhergehenden Ansprüche umsetzt.
